# EUROPEAN PATENT APPLICATION

(11) **EP 4 061 028 A1**
(43) Date of publication of application: **21.09.2022**
(21) Application number: 21865319.4
(22) Date of filing: 19.01.2021
(51) Int. Cl.: H04W 4/80

(54) **BLUETOOTH CONNECTION SWITCHING METHOD, BLUETOOTH CHIP, AND BLUETOOTH DEVICE**

(71) Applicant: SHENZHEN GOODIX TECHNOLOGY CO., LTD., Shenzhen, Guangdong 518045 (CN)
(72) Inventor: ZHANG, Ting, Shenzhen, Guangdong 518045 (CN); ZHU, Ming, Shenzhen, Guangdong 518045 (CN)
(74) Representative: Sticht, Andreas
(86) International application number: PCT/CN2021/072770
(87) International publication number: WO 2022/155797

(57) **Abstract**

Embodiments of the present disclosure provide a method for switching a Bluetooth connection, a Bluetooth chip, and a Bluetooth device; where the method for switching a Bluetooth connection may be applied to the Bluetooth device. The method includes: establishing, by the Bluetooth device, Bluetooth connections with a first terminal device and a second terminal device; receiving, by the Bluetooth device, a content playing request from the first terminal device, and performing data transmission with the first terminal device; receiving, by the Bluetooth device, a content playing request from the second terminal device, and sending a notification message for suspending data transmission to the first terminal device; suspending, by the Bluetooth device, data transmission with the first terminal device, and maintaining the Bluetooth connection with the first terminal device; and performing, by the Bluetooth device, data transmission with the second terminal device. The method for switching a Bluetooth connection can reduce the user's operations of connecting and switching between terminal devices for data transmission with the Bluetooth device, and shorten the user's waiting time, thereby improving the user experience.

## Description

### TECHNICAL FIELD

The present disclosure relates to the technical field of communication, and in particular to, a method for switching a Bluetooth connection, a Bluetooth chip, and a Bluetooth device.

### BACKGROUND

A Bluetooth technology is a technology that supports short-distance wireless data transmission between different devices. An existing Bluetooth headset usually only supports connection to one terminal device, but with the diversification of forms of terminal devices and the difference of technical performance thereof, a user generally has a plurality of terminal devices, including a mobile phone, a notebook computer, a tablet computer, and the like, to adapt to different usage scenarios. At present, for example, when the user has connected a Bluetooth headset to a notebook computer and started to play music, if a mobile phone of the user has an incoming call at this time, the user needs to manually disconnect a Bluetooth connection between the Bluetooth headset and the notebook computer, and then connect the Bluetooth headset to the mobile phone, so that the voice call can be made through the Bluetooth headset. If the user would like to switch back to play music using the notebook computer after completing the voice call, the user needs to manually disconnect the Bluetooth connection between the Bluetooth headset and the mobile phone, and then connect the Bluetooth headset to the notebook computer. This method will not only cause operational inconveniences to the user, but also will make the user spend a long time in completing the connection and switching of the Bluetooth headset, thereby seriously affecting the user experience.

### SUMMARY

In view of this, embodiments of the present disclosure provide a method for switching a Bluetooth connection, a Bluetooth chip, and a Bluetooth device, to make the connection and switching between the Bluetooth device and a plurality of terminal devices simpler and more efficient, thereby reducing the complexity of user operations, and improving the user experience.

In a first aspect, an embodiment of the present disclosure provides a method for switching a Bluetooth connection. The method is applied to a Bluetooth device, and includes:
establishing, by the Bluetooth device, Bluetooth connections with a first terminal device and a second terminal device;
receiving, by the Bluetooth device, a content playing request from the first terminal device, and performing data transmission with the first terminal device;
receiving, by the Bluetooth device, a content playing request from the second terminal device, and sending a notification message for suspending data transmission to the first terminal device;
suspending, by the Bluetooth device, data transmission with the first terminal device, and maintaining the Bluetooth connection with the first terminal device; and
performing, by the Bluetooth device, data transmission with the second terminal device.

By establishing a Bluetooth connection between the Bluetooth device and each usable terminal device, and always maintaining the Bluetooth connection between the Bluetooth device and each usable terminal device, a user only needs to start a to-be-played content of a to-be-used terminal device when switching a terminal device in use, such that the Bluetooth device automatically suspends data transmission with a terminal device currently in use, and switches to perform data transmission with the to-be-used terminal device, thereby reducing the complexity of user operations, shortening the user's waiting time required in the process of connecting and switching between different terminal devices, and improving the user experience.

Alternatively, the first terminal device or the second terminal device is a historical connection device for the Bluetooth device; and the historical connection device is a terminal device that has established a Bluetooth connection with the Bluetooth device; and
identifier information of the first terminal device or identifier information of the second terminal device is stored in a memory of the Bluetooth device.
Alternatively, the establishing, by the Bluetooth device, the Bluetooth connections with the first terminal device and the second terminal device further includes:
automatically establishing, by the Bluetooth device, the Bluetooth connection with the first terminal device or the second terminal device based on the identifier information of the first terminal device or the identifier information of the second terminal device.

Alternatively, the automatically establishing, by the Bluetooth device, the Bluetooth connection with the first terminal device or the second terminal device based on the identifier information of the first terminal device or the identifier information of the second terminal device further includes:
sending, by the Bluetooth device, a request for establishing a Bluetooth physical link to the first terminal device or the second terminal device; and receiving, by the Bluetooth device, a response for establishing the Bluetooth physical link sent from the first terminal device or the second terminal device;
sending, by the Bluetooth device, a request for establishing a signal channel and a data channel to the first terminal device or the second terminal device; and receiving, by the Bluetooth device, a response for establishing the signal channel and the data channel sent from the first terminal device or the second terminal device;
sending, by the Bluetooth device, a request for establishing a remote control connection to the first terminal device or the second terminal device; and receiving, by the Bluetooth device, a response for establishing the remote control connection sent from the first terminal device or the second terminal device.

Alternatively, the automatically establishing, by the Bluetooth device, the Bluetooth connection with the first terminal device or the second terminal device based on the identifier information of the first terminal device or the identifier information of the second terminal device further includes:
implementing, by the Bluetooth device, an operation of establishing a first ACL link or a second ACL link with the first terminal device or the second terminal device;
implementing, by the Bluetooth device, an operation of establishing a first AVDTP connection or a second AVDTP connection with the first terminal device or the second terminal device; and
implementing, by the Bluetooth device, an operation of establishing a first AVRCP connection or a second AVRCP with the first terminal device or the second terminal device.

Alternatively, after the Bluetooth device implements the operation of establishing the first AVDTP connection or the second AVDTP connection with the first terminal device or the second terminal device, a state of the first AVDTP connection or the second AVDTP connection is switched from an idle state to an on state.

Alternatively, after the Bluetooth device receives the content playing request from the first terminal device or the second terminal device, the state of the first AVDTP connection or the second AVDTP connection is switched from the on state to an audio streaming state.

Alternatively, the suspending, by the Bluetooth device, data transmission with the first terminal device, and maintaining the Bluetooth connection with the first terminal device further includes:
switching the state of the first AVDTP connection from the audio streaming state back to the on state.

Alternatively, a sequence in which the Bluetooth device establishes the Bluetooth connections with the first terminal device and the second terminal device is determined based on priorities of the first terminal device and the second terminal device; and
the priorities of the first terminal device and the second terminal device are determined based on at least one of: a frequency or time sequence of establishing the Bluetooth connection with the Bluetooth device, or a frequency or time sequence of performing data transmission with the Bluetooth device.

Alternatively, the number of pieces of identifier information of historical connection devices stored in the memory of the Bluetooth device is less than or equal to a maximum number of connections of the Bluetooth device.

Alternatively, when the number of historical connection devices that have established Bluetooth connections with the Bluetooth device reaches the maximum number of connections of the Bluetooth device, and an additional terminal device requests to establish a Bluetooth connection with the Bluetooth device, identifier information of a historical connection device with a lowest priority is deleted, and identifier information of the additional terminal device is stored in the memory of the Bluetooth device.

Alternatively, after the identifier information of the additional terminal device is stored in the memory of the Bluetooth device, priorities of terminal devices whose identifier information is stored in the memory of the Bluetooth device are rearranged.

Alternatively, the method further includes:
receiving, by the Bluetooth device, a content playing request from the first terminal device again, and sending a notification message for suspending data transmission to the second terminal device;
suspending, by the Bluetooth device, data transmission with the second terminal device, and maintaining the Bluetooth connection with the second terminal device; and
performing, by the Bluetooth device, data transmission with the first terminal device again.

In a second aspect, an embodiment of the present disclosure provides a Bluetooth chip, including a memory and a processor, where the memory is coupled to the processor;
the memory is configured to store computer program instructions; and
the processor is configured to invoke the computer program instructions stored in the memory, such that the Bluetooth chip executes the method for switching a Bluetooth connection according to the first aspect or any one alternative implementation in the first aspect.

In a third aspect, an embodiment of the present disclosure provides a Bluetooth device, including a housing and the Bluetooth chip according to the second aspect arranged within the housing.

It is understandable that the Bluetooth chip according to the second aspect and the Bluetooth device according to the third aspect provided above are all configured to execute the corresponding method provided above, and therefore, the beneficial effects in the corresponding method provided above may be referred to for achievable beneficial effects thereof. The description will not be repeated here.

### BRIEF DESCRIPTION OF THE DRAWINGS

One or more embodiments are illustrated with reference to the pictures in the corresponding accompanying drawings, but these illustrations do not constitute a limitation on the embodiments. When the description below involves the accompanying drawings, like reference numerals refer to identical or similar elements in different accompanying drawings. Unless otherwise particularly stated, the figures in the accompanying drawings do not constitute a limitation of scale.
Fig. 1 is a schematic structural diagram of a Bluetooth system provided in an embodiment of the present disclosure;
Fig. 2 is a schematic flowchart of a method for switching a Bluetooth connection provided in an embodiment of the present disclosure;
Fig. 3 is a schematic diagram of switching a Bluetooth connection provided in an embodiment of the present disclosure;
Fig. 4 is a schematic flowchart of a method for switching a Bluetooth connection in the prior art;
Fig. 5 is a schematic flowchart of another method for switching a Bluetooth connection provided in an embodiment of the present disclosure;
Fig. 6 is a schematic structural diagram of a Bluetooth framework provided in an embodiment of the present disclosure;
Fig. 7 is a schematic flowchart of automatically establishing a Bluetooth connection between a Bluetooth device and a first terminal device provided in an embodiment of the present disclosure;
Fig. 8 is a schematic flowchart of automatically establishing a Bluetooth connection between another Bluetooth device and the first terminal device provided in an embodiment of the present disclosure;
Fig. 9 is an example schematic diagram of a state machine of an AVDTP connection in a method for switching a Bluetooth connection provided in an embodiment of the present disclosure;
Fig. 10 is a schematic flowchart of still another method for switching a Bluetooth connection provided in an embodiment of the present disclosure;
Fig. 11 is a schematic diagram of a priority of historical connection devices provided in an embodiment of the present disclosure;
Fig. 12 is a schematic diagram of another priority of the historical connection devices provided in an embodiment of the present disclosure;
Fig. 13 is a schematic diagram of still another priority of the historical connection devices provided in an embodiment of the present disclosure;
Fig. 14 is a schematic diagram of a priority of historical connection devices after an additional terminal device is added provided in an embodiment of the present disclosure; and
Fig. 15 is a schematic structural diagram of a Bluetooth chip provided in an embodiment of the present disclosure.

### DETAILED DESCRIPTION OF EMBODIMENTS

The technical solutions in embodiments of the present disclosure will be clearly and completely described below with reference to the accompanying drawings. Apparently, the embodiments described below are a part, instead of all, of the embodiments of the present disclosure.

The terms used in the present disclosure are intended merely to describe particular embodiments, and are not intended to limit the present disclosure. The singular forms of "a" and "the" used in the present disclosure and the appended claims are also intended to include plural forms, unless the context clearly indicates other meanings. It should be further understood that the term "and/or" used herein refers to any or all possible combinations including one or more associated listed items.

Unless a specified order is clearly stated in the context of the present disclosure, the processing steps described herein may be executed differently from the specified order. That is, each step may be executed in the specified order, or each step may be executed substantially simultaneously, each step may be executed in a reverse order, or each step may be executed in a different order.

In addition, the terms such as "first" and "second" are only used for distinguishing between similar objects, and cannot be understood as indicating or implying relative importance or implicitly indicating the number of indicated technical features. Thus, features defined with "first," "second," or the like may explicitly or implicitly include one or more of the features.

The embodiments of the present disclosure provide a method for switching a Bluetooth connection, a Bluetooth chip, and a Bluetooth device; where examples of the Bluetooth device include, but are not limited to, a Bluetooth headset and a Bluetooth speaker.

The process of establishing a Bluetooth connection between a Bluetooth device and a terminal device generally includes: after enabling a Bluetooth function, the Bluetooth device searches for terminal devices within its connectable range, pairs with the searched terminal devices, and then establishes a Bluetooth connection with a successfully paired terminal device.

In the embodiments of the present disclosure, based on a Bluetooth reconnection technology, if a Bluetooth device has established Bluetooth connections with some terminal devices, a memory of the Bluetooth device will store identifier information of these terminal devices; and specifically, the identifier information may be address information of the terminal devices, such as MAC (media access control) addresses. For ease of description, a device that has established a Bluetooth connection with the Bluetooth device is referred to as a historical connection device below.

When re-enabling the Bluetooth function, the Bluetooth device may automatically attempt to establish Bluetooth connections with these historical connection devices successively based on the identifier information of these historical connection devices, without searching and pairing again, and without manually establishing the Bluetooth connections. If the Bluetooth device fails to establish a Bluetooth connection with a historical connection device, for example, a historical connection device is not within the connectable range of the Bluetooth device, the Bluetooth device will automatically skip the historical connection device failing to be connected, and automatically attempt to establish a Bluetooth connection with another historical connection device, until having attempted to establish Bluetooth connections with all historical connection devices whose identifier information is stored.

When the memory of the Bluetooth device does not store identifier information of any terminal device, for example, the Bluetooth device is used for a first time, after the Bluetooth function of the Bluetooth device is enabled, the Bluetooth device needs to wait for a request for Bluetooth connection sent from a terminal device to the Bluetooth device, and store identifier information of a terminal device with which a Bluetooth connection is successfully established. Therefore, when re-enabling the Bluetooth function, the Bluetooth device may automatically attempt to establish Bluetooth connections with terminal devices whose identifier information is stored in the memory successively.

In the embodiments of the present disclosure, two or more than two historical connection devices may be within the connectable range of the Bluetooth device, and the Bluetooth device may automatically establish Bluetooth connections with the two or more than two historical connection devices based on corresponding identifier information.

In order to clearly describe the method for switching a Bluetooth connection provided in the embodiments of the present disclosure, the description is given below by taking two historical connection devices within the connectable range of the Bluetooth device as an example.

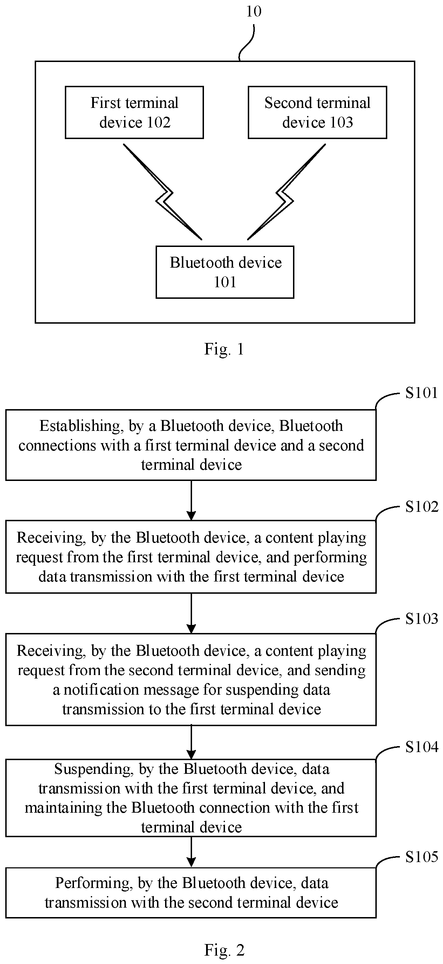

As shown in Fig. 1, a schematic structural diagram of a Bluetooth system provided in an embodiment of the present disclosure is shown. The Bluetooth system 10 includes: a Bluetooth device 101, a first terminal device 102, and a second terminal device 103. When the first terminal device 102 and the second terminal device 103 are historical connection devices for the Bluetooth device 101, and both the first terminal device 102 and the second terminal device 103 are within the connectable range of the Bluetooth device 101, identifier information of the first terminal device 102 and the second terminal device 103 is stored in a memory of the Bluetooth device 101, and therefore, the Bluetooth device 101 may automatically establish Bluetooth connections with the first terminal device 102 and the second terminal 103 respectively based on the identifier information of the first terminal device 102 and the second terminal device 103.

As an example, the Bluetooth device 101 may be a TWS (true wireless stereo) earbud, and the first terminal device 102 or the second terminal device 103 may be a notebook computer, such that the Bluetooth device 101 may serve as an audio data output device of the first terminal device 102 or the first terminal device 103, for playing music; and alternatively, the Bluetooth device 101 may be a TWS earbud, and the first terminal device 102 or the second terminal device 103 may be a smart phone, such that the Bluetooth device 101 may serve as an audio data input/output device of the first terminal device 102 or the second terminal device 103, for making a voice call.

In a first aspect, an embodiment of the present disclosure provides a method for switching a Bluetooth connection. As shown in Fig. 2, a schematic flowchart of a method for switching a Bluetooth connection provided in an embodiment of the present disclosure is shown. The method may be applied to the Bluetooth device 101 in the Bluetooth system 10 shown in Fig. 1. The method specifically includes the following steps:

Step S101: establishing, by the Bluetooth device 101, Bluetooth connections with the first terminal device 102 and the second terminal device 103.

If the first terminal device 102 and the second terminal device 103 are historical connection devices for the Bluetooth device 101, the Bluetooth device 101 may automatically establish the Bluetooth connections with the first terminal device 102 and the second terminal device 103 based on identifier information of the first terminal device 102 and the second terminal device 103. If the first terminal device 102 and the second terminal device 103 establish the Bluetooth connections with the Bluetooth device 101 for a first time, the first terminal device and the second terminal device may establish the Bluetooth connections with the Bluetooth device 101 by searching, pairing, and connection, and after the Bluetooth connections are successfully established, the first terminal device 102 and the second terminal device 103 may become historical connection devices for the Bluetooth device 101.

Step S102: receiving, by the Bluetooth device 101, a content playing request from the first terminal device 102, and performing data transmission with the first terminal device 102.

The first terminal device 102 starts to perform content playing through the Bluetooth device 101.

Step S103: receiving, by the Bluetooth device 101, a content playing request from the second terminal device 103, and sending a notification message for suspending data transmission to the first terminal device 102.

When the first terminal device 102 is performing content playing through the Bluetooth device 101, the second terminal device 103 requests to perform content playing through the Bluetooth device 101, and then the Bluetooth device 101 may notify the first terminal device 102 to suspend content playing.

Step S104: suspending, by the Bluetooth device 101, data transmission with the first terminal device 102, and maintaining the Bluetooth connection with the first terminal device 102.

While suspending content playing through the Bluetooth device 101, the first terminal device 102 still maintains the Bluetooth connection with the Bluetooth device 101.

Step S105: performing, by the Bluetooth device 101, data transmission with the second terminal device 103.

Since the Bluetooth device 101 has established the Bluetooth connection with the second terminal device 103, the second terminal device 103 may perform content playing directly through the Bluetooth device 101.

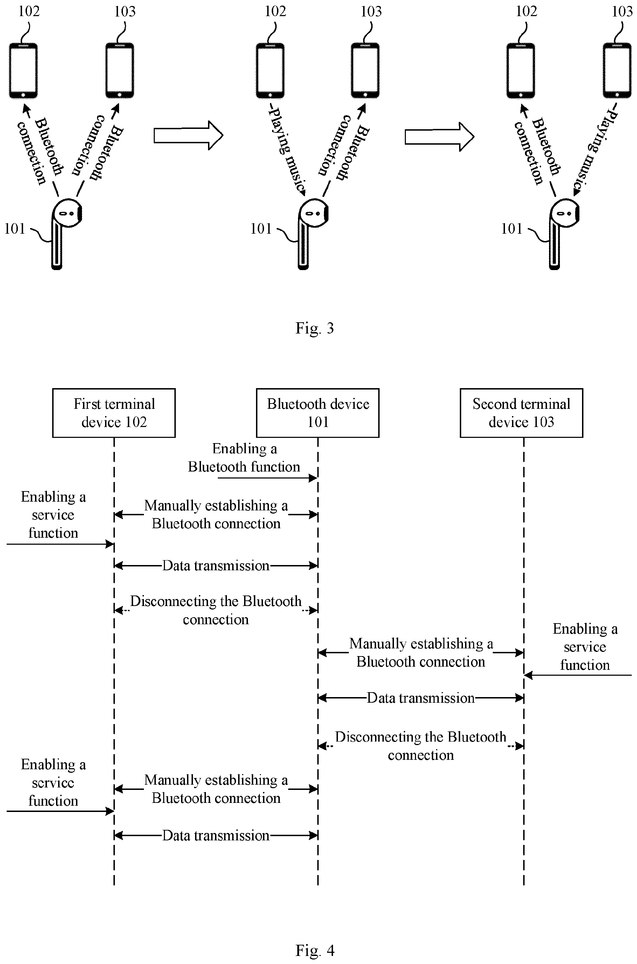

As an example, as shown in Fig. 3, the Bluetooth device 101 is a TWS earbud, and both the first terminal device 102 and the second terminal device 103 are smart phones, and have established Bluetooth connections with the Bluetooth device 101. When the first terminal device 102 is playing music through the Bluetooth device 101, and a user enables a music playing service of the second terminal device 103, the Bluetooth device 101 notifies the first terminal device 102 to suspend music playing, and receives audio data transmitted from the second terminal device 103, such that the second terminal device 103 may play music through the Bluetooth device 101, while the Bluetooth device 101 still maintains the Bluetooth connection with the first terminal device 102.

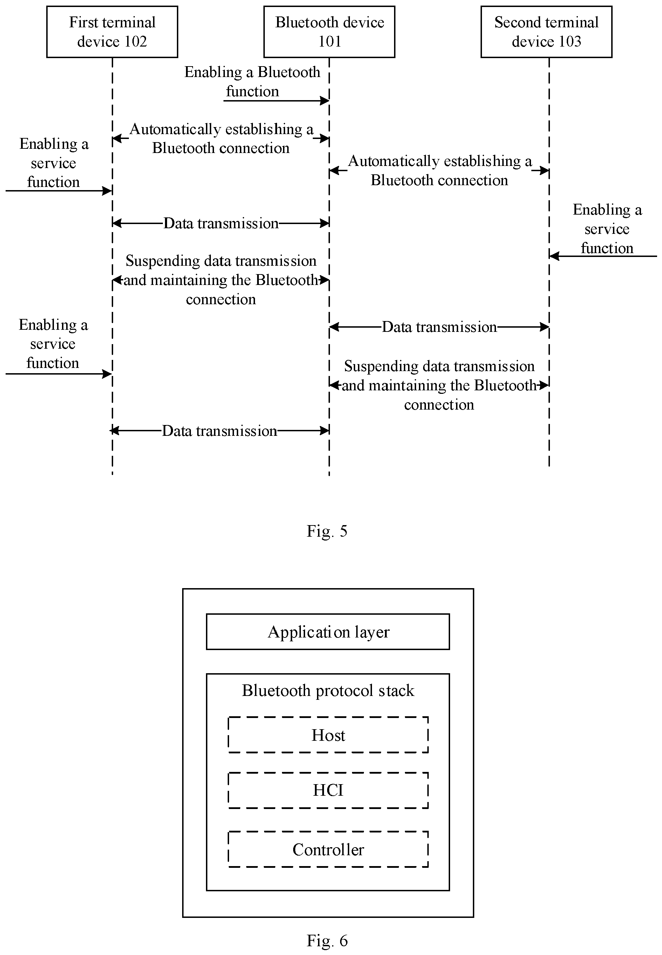

Fig. 4 is a schematic flowchart of a method for switching a Bluetooth connection in the prior art, and Fig. 5 is a schematic flowchart of another method for switching a Bluetooth connection provided in an embodiment of the present disclosure. As can be seen from comparison between Fig. 4 and Fig. 5, in the implementations of the present disclosure, when the first terminal device 102 and the second terminal device 103 are historical connection devices for the Bluetooth device 101, the Bluetooth device 101 can automatically establish Bluetooth connections with the first terminal device 102 and the second terminal device 103. After a user enables a service function of one of to-be-used terminal devices, the Bluetooth device receives a content playing request sent from the terminal device, and may automatically start data transmission with the terminal device, i.e., the user can enable the service function of the to-be-used terminal device and perform data transmission, without the need for first disconnecting a Bluetooth connection between the Bluetooth device and a terminal device currently in use, and then manually establishing a Bluetooth connection between the Bluetooth device and the to-be-used terminal device as shown in Fig. 4, thereby reducing the user's waiting time in the process of establishing the Bluetooth connection and switching between terminal devices, reducing the complexity of user operations, and improving the user experience, without occupying too many channel resources.

In the embodiment of the present disclosure, the service function of the terminal device may be an audio service, i.e., a service or an application capable of providing an audio function (such as audio playing, audio recording, or voice call). Specifically, the audio service may be divided into: e.g., voice, media audio, and background sound based on providable service types; or, the audio service may be divided into: e.g., music, game, recording, video, voice call, voice assistant, navigation prompt tone, and message prompt tone based on different applications.

The audio service involves audio data transmission. Specifically, the audio data may include: audio data corresponding to an audio content, content control for controlling audio data playing, and the like. For example, the audio service may be divided into voice, media audio, and background sound, and accordingly, the audio data corresponding to the audio content may be divided into: voice data, media audio data, and background sound data; where the voice data may include: e.g., sound during a voice call; the media audio data may include: e.g., music, video, and games; and the background sound data may include: e.g., message prompt tone. The content control may include: e.g., volume control, call control, and media control; where the volume control may include: control commands such as volume up and volume down; the call control may include: control commands such as voice dialing, answering an incoming call, holding a call, hanging up a call, rejecting a call, and calling back an incoming call; and the media control may include: control commands such as play, pause, backward, and forward.

Only by following a Bluetooth framework between the Bluetooth device 101 and the first terminal device 102 and the second terminal device 103, can Bluetooth communication be implemented based on the Bluetooth technology. As shown in Fig. 6, a schematic structural diagram of a Bluetooth framework provided in an embodiment of the present disclosure is shown. The Bluetooth framework may include: an application layer and a Bluetooth protocol stack; where the Bluetooth protocol stack may include: a host, a host controller interface (HCI), and a controller.

Specifically, the application layer may include a telephony application, a media player application (e.g., an audio player or a video player), and the like.

The host defines a profile and a core protocol of multiple application programs in the Bluetooth framework. Each protocol defines its respective corresponding message format and application rules, such as Advanced Audio Distribution Profile (A2DP), Hands Free Profile (HFP), Audio/Video Remote Control Profile (AVRCP), Audio/Video Distribution Transport Protocol (AVDTP), and Audio/Video Control Transport Protocol (AVCTP).

The controller defines an underlying hardware portion, including link manager (LM), radio frequency (RF), baseband (BB), and the like; where the link manager is responsible for managing the communication between Bluetooth devices, to achieve operations such as link establishment, configuration, teardown, and verification, for example, establishing an asynchronous connection-oriented link (ACL) or a synchronous connection-oriented (SCO) link, and enabling a Bluetooth device to enter a working mode of an energy-saving state. Radio frequency mainly defines the conditions to be satisfied for normal operation of a Bluetooth transceiver, and may filter and transmit data bit streams through microwaves in an Industrial Scientific Medical (ISM) frequency band at 2.4 GHz. The baseband is responsible for frequency hopping and the transmission of Bluetooth data and information frames, and is characterized by short distance and low power consumption.

Located between the host and the controller, the HCI provides the host with a uniform interface to the link manager in the controller and a unified approach to the baseband. There are several transport layers between the core protocol layer of the host and the controller. These transport layers are transparent and are used to complete data transmission tasks.

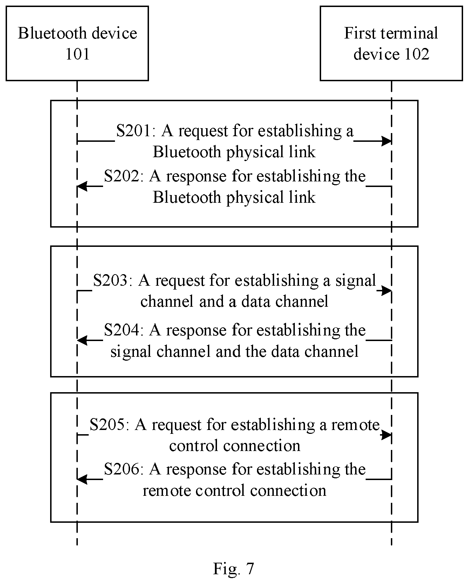

As shown in Fig. 7, a schematic flowchart of automatically establishing a Bluetooth connection between a Bluetooth device and a first terminal device provided in an embodiment of the present disclosure is shown, where the first terminal device 102 is a historical connection device for the Bluetooth device 101. The present embodiment specifically includes the following steps:
Step S201: sending, by the Bluetooth device 101, a request for establishing a Bluetooth physical link to the first terminal device 102.
Step S202: sending, by the first terminal device 102, a response for establishing the Bluetooth physical link to the Bluetooth device 101.
Step S203: sending, by the Bluetooth device 101, a request for establishing a signal channel and a data channel to the first terminal device 102.
Step S204: receiving, by the first terminal device 102, a response for establishing the signal channel and the data channel to the Bluetooth device 101.
Step S205: sending, by the Bluetooth device 101, a request for establishing a remote control connection to the first terminal device 102.
Step S206: sending, by the first terminal device 102, a response for establishing the remote control connection to the Bluetooth device 101.

It should be noted that when the second terminal device 103 is a historical connection device for the Bluetooth device 101, the Bluetooth device 101 may also establish a Bluetooth connection with the second terminal device 103 based on the method shown in Fig. 7.

Further, the Bluetooth device 101, the first terminal device 102, and the second terminal device 103 may all support the A2DP profile.

The A2DP is an audio transmission profile that may distribute audio streams from an audio source (SRC) to an audio sink (SNK) through a transport layer for point-to-point audio data transmission.

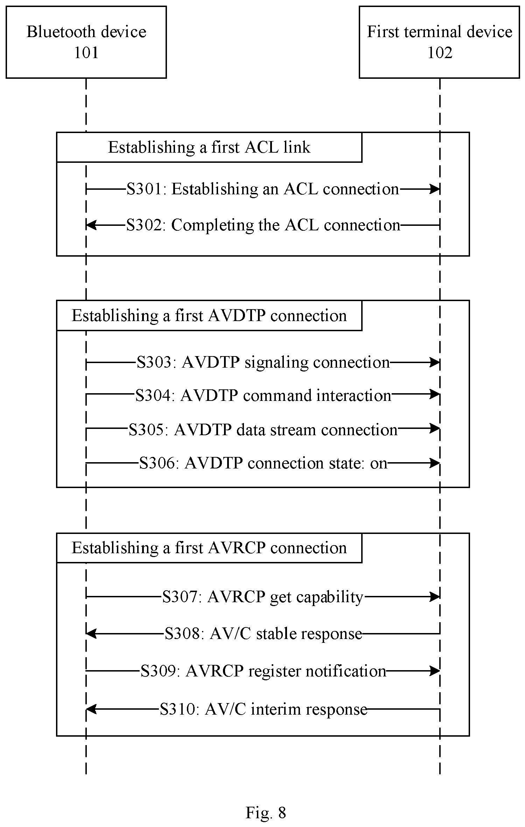

As shown in Fig. 8, a schematic flowchart of automatically establishing a Bluetooth connection between another Bluetooth device and the first terminal device provided in an embodiment of the present disclosure is shown, where the first terminal device 102 is a historical connection device for the Bluetooth device 101, and both the Bluetooth device 101 and the first terminal device 102 support the A2DP profile. The Bluetooth device 101 needs to execute the following operations successively to establish a Bluetooth connection with the first terminal device 102: establishing a first ACL link, establishing a first AVDTP connection, and establishing a first AVRCP connection. The present embodiment specifically includes the following steps:
Step S301: sending, by the Bluetooth device 101, a request for establishing an ACL connection to the first terminal device 102.
Step S302: sending, by the first terminal device 102, a response for completing the ACL connection to the Bluetooth device 101.

The above step S301 to step S302 may be understood as implementing, by the Bluetooth device 101, an operation of establishing the first ACL link with the first terminal device 102, i.e., establishing a Bluetooth physical link. Since audio data of the A2DP protocol needs to be transmitted on the ACL link, it is first necessary to establish the first ACL link between the Bluetooth device 101 and the first terminal device 102.

Step S303: sending, by the Bluetooth device 101, a request for an AVDTP signaling connection to the first terminal device 102.

Step S304: performing, by the Bluetooth device 101, an AVDTP command interaction with the first terminal device 102.

Step S305: sending, by the Bluetooth device 101, a request for an AVDTP data stream connection to the first terminal device 102.

Step S306: sending, by the Bluetooth device 101, status information (on state) of a first AVDTP connection to the first terminal device 102.

The above step S303 to step S306 may be understood as implementing, by the Bluetooth device 101, an operation of establishing the first AVDTP connection with the first terminal device 102, i.e., establishing a signal channel and a data channel.

Step S307: sending, by the Bluetooth device 101, a request for an AVRCP get capability to the first terminal device 102.

The AVRCP get capability may include: e.g., a supporting event (such as a playing status, a playing progress, and a player), and a manufacturer.

Step S308: sending, by the first terminal device 102, an AV/C stable response to the Bluetooth device 101.

Step S309: sending, by the Bluetooth device 101, an AVRCP register notification of a playing status change to the first terminal device 102.

After the registration is successful, if the playing status of the first terminal device 102 changes, the first terminal device will automatically notify the Bluetooth device 101, thereby making correct processing.

Step S310: sending, by the first terminal device 102, an AV/C interim response to the Bluetooth device 101.

The above step S307 to step S310 may be understood as implementing, by the Bluetooth device 101, an operation of establishing the first AVRCP connection with the first terminal device 102, i.e., establishing a remote control connection. After the Bluetooth device 101 establishes the first AVRCP connection with the first terminal device 102, the Bluetooth device 101 may implement control over the playing status of the first terminal device 102, for example, controlling the first terminal device 102 to start playing music or suspend playing music, and controlling volume up or volume down.

After the above step S301 to step S310 are completed, i.e., after the Bluetooth connection between the Bluetooth device 101 and the first terminal device 102 is established, if a user enables an audio service of the first terminal device 102, audio data transmission between the Bluetooth device 101 and the first terminal device 102 may be started.

Accordingly, the Bluetooth device 101 needs to execute the following operations successively to automatically establish a Bluetooth connection with the second terminal device 103: establishing a second ACL link, establishing a second AVDTP connection, and establishing a second AVRCP connection; and the specific operation steps may be the same as step S301 to step S310 shown in Fig. 8. The description will not be repeated here.

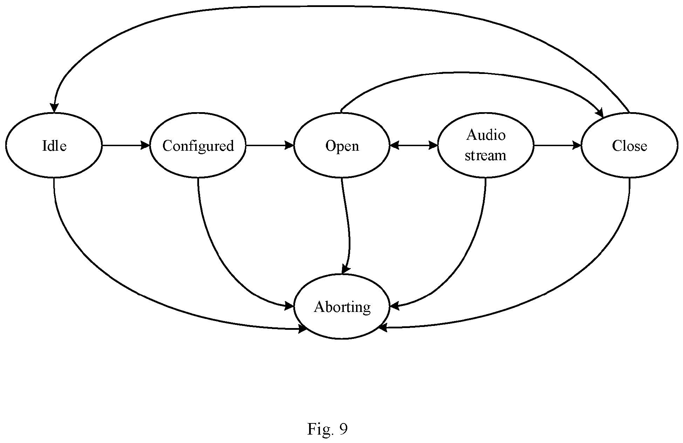

Fig. 9 is an example schematic diagram of a state machine of an AVDTP connection in a method for switching a Bluetooth connection provided in an embodiment of the present disclosure. Referring to Fig. 9, six state machines of the AVDTP connection are: idle, configured, open, audio streaming, close, and aborting, respectively. For example, after the Bluetooth device 101 implements an operation of establishing a first AVDTP connection with the first terminal device 102, a state of the first AVDTP connection may be switched from an idle state to an on state; and after the Bluetooth device 101 implements an operation of establishing a second AVDTP connection with the second terminal device 103, a state of the second AVDTP connection may be switched from an idle state to an on state.

In addition, a sequence in which the Bluetooth device establishes Bluetooth connections with a plurality of historical connection devices may be determined based on priorities of the historical connection devices. As an example, when a priority of the first terminal device 102 is higher than that of the second terminal device 103, the Bluetooth device 101 first establishes a Bluetooth connection with the first terminal device 102 , and then establishes a Bluetooth connection with the second terminal device 103.

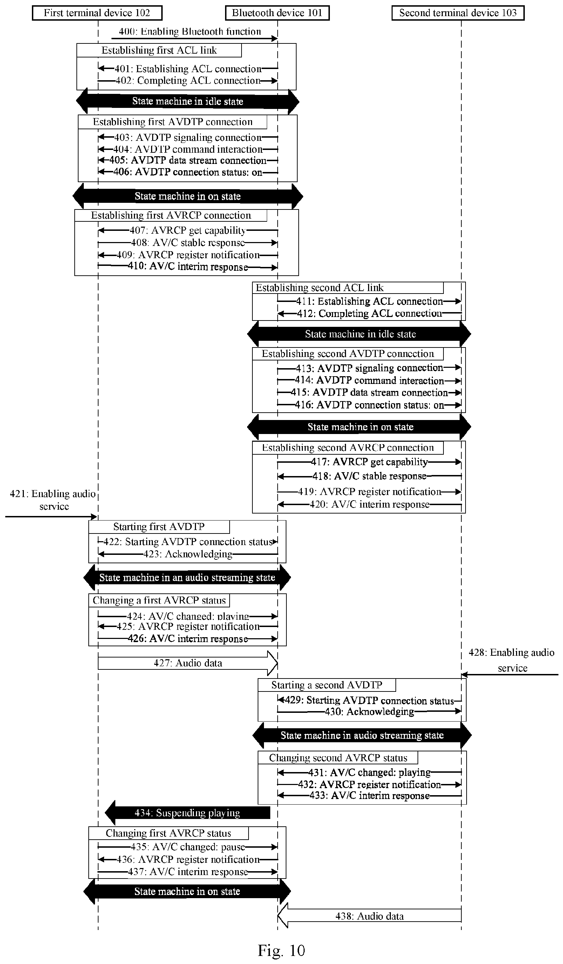

As shown in Fig. 10, a schematic flowchart of still another method for switching a Bluetooth connection provided in an embodiment of the present disclosure is shown. Both the first terminal device 102 and the second terminal device 103 are historical connection devices for the Bluetooth device 101, and a priority of the first terminal device 102 is higher than that of the second terminal device 103. The present embodiment specifically includes the following steps:

Step S400: enabling a Bluetooth function of the Bluetooth device 101.

As an example, the Bluetooth device 101 may be a TWS earbud, and a user may enable the Bluetooth function of the TWS earbud by opening a charging box of the TWS earbud. When the Bluetooth function of the Bluetooth device 101 is enabled, the Bluetooth device may automatically establish Bluetooth connections with historical connection devices within its connectable range based on identifier information of historical connection devices stored in its memory.

Step S401: sending, by the Bluetooth device 101, a request for establishing an ACL connection to the first terminal device 102.

Step S402: sending, by the first terminal device 102, a response for completing the ACL connection to the Bluetooth device 101.

The above step S401 to step S402 may be understood as implementing, by the Bluetooth device 101, an operation of establishing the first ACL link with the first terminal device 102.

Step S403: sending, by the Bluetooth device 101, a request for an AVDTP signaling connection to the first terminal device 102.

Step S404: performing, by the Bluetooth device 101, an AVDTP command interaction with the first terminal device 102.

Step S405: sending, by the Bluetooth device 101, a request for an AVDTP data stream connection to the first terminal device 102.

Step S406: sending, by the Bluetooth device 101, status information (on state) of a first AVDTP connection to the first terminal device 102.

The above step S403 to step S406 may be understood as implementing, by the Bluetooth device 101, an operation of establishing the first AVDTP connection with the first terminal device 102; and after the first AVDTP connection is established, a state of the first AVDTP connection is switched from an idle state to the on state.

Step S407: sending, by the Bluetooth device 101, a request for an AVRCP get capability to the first terminal device 102.

Step S408: sending, by the first terminal device 102, an AV/C stable response to the Bluetooth device 101.

Step S409: sending, by the Bluetooth device 101, an AVRCP register notification of a playing status change to the first terminal device 102.

Step S410: sending, by the first terminal device 102, an AV/C interim response to the Bluetooth device 101.

The above step S407 to step S410 may be understood as implementing, by the Bluetooth device 101, an operation of establishing a first AVRCP connection with the first terminal device 102.

The above step S401 to step S410 may be understood as a process of automatically establishing, by the Bluetooth device 101, a Bluetooth connection with the first terminal device 102.

Step S411: sending, by the Bluetooth device 101, a request for establishing an ACL connection to the second terminal device 103.

Step S412: sending, by the second terminal device 103, a response for completing the ACL connection to the Bluetooth device 101.

The above step S411 to step S412 may be understood as implementing, by the Bluetooth device 101, an operation of establishing a second ACL link with the second terminal device 103.

Step S413: sending, by the Bluetooth device 101, a request for an AVDTP signaling connection to the second terminal device 103.

Step S414: performing, by the Bluetooth device 101, an AVDTP command interaction with the second terminal device 103.

Step S415: sending, by the Bluetooth device 101, a request for an AVDTP data stream connection to the second terminal device 103.

Step S416: sending, by the Bluetooth device 101, status information (on state) of a second AVDTP connection to the second terminal device 103.

The above step S413 to step S416 may be understood as implementing, by the Bluetooth device 101, an operation of establishing the second AVDTP connection with the second terminal device 103; and after the second AVDTP connection is established, a state of the second AVDTP connection is switched from an idle state to the on state.

Step S417: sending, by the Bluetooth device 101, a request for an AVRCP get capability to the second terminal device 103.

Step S418: sending, by the second terminal device 103, an AV/C stable response to the Bluetooth device 101.

Step S419: sending, by the Bluetooth device 101, an AVRCP register notification of a playing status change to the second terminal device 103.

Step S420: sending, by the second terminal device 103, an AV/C interim response to the Bluetooth device 101.

The above step S417 to step S420 may be understood as implementing, by the Bluetooth device 101, an operation of establishing a second AVRCP connection with the second terminal device 103.

The above step S411 to step S420 may be understood as a process of automatically establishing, by the Bluetooth device 101, a Bluetooth connection with the second terminal device 103.

Step S421: enabling, by the first terminal device 102, an audio service.

Specifically, the audio service enabled by the first terminal device 102 may be playing music, answering a call, playing a navigation prompt tone, and the like. For ease of description, the description will be given below by taking music playing as an example.

Step S422: sending, by the first terminal device 102, status information of starting the first AVDTP connection to the Bluetooth device 101.

Step S423: sending, by the Bluetooth device 101, a response for acknowledging starting the first AVDTP connection to the first terminal device 102.

The above step S422 to step S423 may be understood as starting the state of the first AVDTP connection, and switching the state of the first AVDTP connection from the on state to an audio streaming state, which can be used for audio data transmission.

Step S424: The first terminal device 102 sends a command of changing a playing status to "playing" (AV/C changed: playing) to the Bluetooth device 101 through an AV/C message.

Step S425: sending, by the Bluetooth device 101, an AVRCP register notification of a playing status change to the first terminal device 102.

Step S426: sending, by the first terminal device 102, an AV/C interim response to the Bluetooth device 101.

The above step S424 to step S426 may be understood as sending, by the first terminal device 102, a music playing request to the Bluetooth device, and changing a state of the first AVRCP connection between the first terminal device 102 and the Bluetooth device 101 to playing.

Step S427: sending, by the first terminal device 102, audio data to the Bluetooth device 101.

The above step S427 may be understood as receiving, by the Bluetooth device 101, the audio data transmitted from the first terminal device 102, for music playing.

Step S428: enabling, by the second terminal device 103, an audio service.

Specifically, the audio service enabled by the second terminal device 103 may be playing music, answering a call, playing a navigation prompt tone, and the like. For ease of description, the description is given by taking music playing as an example.

Step S429: sending, by the second terminal device 103, status information of starting the second AVDTP connection to the Bluetooth device 101.

Step S430: sending, by the Bluetooth device 101, a response for acknowledging starting the second AVDTP connection to the second terminal device 103.

The above step S429 to step S430 may be understood as starting the state of the second AVDTP connection, and switching the state of the second AVDTP connection from the on state to an audio streaming state, which can be used for audio data transmission.

Step S431: The second terminal device 103 sends a command of changing the playing status to "playing" to the Bluetooth device 101 through an AV/C message.

Step S432: sending, by the Bluetooth device 101, an AVRCP register notification of a playing status change to the second terminal device 103.

Step S433: sending, by the second terminal device 103, an AV/C interim response to the Bluetooth device 101.

The above step S431 to step S433 may be understood as sending, by the second terminal device 103, a music playing request to the Bluetooth device, and changing the state of the second AVRCP connection between the second terminal device 103 and the Bluetooth device 101 to playing.

Step S434: sending, by the Bluetooth device 101, status information (AVRCP status: suspend) of suspending playing to the first terminal device 102 through an AVRCP message.

The step S434 may be understood as notifying, by the Bluetooth device 101, the first terminal device 102 of suspending playing music.

Step S435: sending, by the first terminal device 102, a command of changing the playing status to "pausing" (AV/C changed: pause) to the Bluetooth device 101 through an AV/C message.

Step S436: sending, by the Bluetooth device 101, an AVRCP register notification of a playing status change to the first terminal device 102.

Step S437: sending, by the first terminal device 102, an AV/C interim response to the Bluetooth device 101.

The above step S435 to step S437 may be understood as changing the state of the first AVRCP connection between the first terminal device 102 and the Bluetooth device 101 to pausing; and switching the state of the first AVDTP connection from the audio streaming state back to the on state.

Step S438: sending, by the second terminal device 103, audio data to the Bluetooth device 101.

The above step S438 may be understood as receiving, by the Bluetooth device 101, the audio data transmitted from the second terminal device 103, for music playing.

It should be noted that since both the audio service of the first terminal device 102 and the audio service of the second terminal device 103 in the present embodiment are playing music, in step S427 and step S438, the first terminal device 102 and the second terminal device 103 serve as audio source terminals, for sending audio data, and the Bluetooth device 101 serves as an audio sink terminal, for receiving the audio data; however, when the audio service is, e.g., recording or voice call, the Bluetooth device 101 may serve as the audio source terminal, for sending audio data, and the first terminal device 102 and the second terminal device 103 may serve as the audio sink terminals, for receiving the audio data.

In addition, if the Bluetooth device 101 needs to switch back to perform audio data transmission with the first terminal device 102 in accordance with a user's instruction, an approach substantially the same as the method for switching a Bluetooth connection shown in Fig. 10 may be used for implementation.

The method for switching a Bluetooth connection provided in the embodiments of the present disclosure enables a Bluetooth device to automatically connect with a plurality of historical connection devices, and automatically switch to perform data transmission with a target device based on user needs, to not only reduce the process of manually establishing a Bluetooth connection by a user, but also simplify the operations required by the user when switching between terminal devices, thereby shortening the user's waiting time in the whole process, and improving the user experience.

It should be noted that the method for switching a Bluetooth connection provided in the embodiments of the present disclosure may also be used to implement connection and switching between a Bluetooth device and three or more than three terminal devices.

In addition, in the embodiments of the present disclosure, if the user enables a service function of any one historical connection device that has established a Bluetooth connection with the Bluetooth device, the Bluetooth device may start data transmission with the historical connection device. Therefore, a sequence in which the Bluetooth device automatically establishes Bluetooth connections with historical connection devices will affect the user's waiting time before using the Bluetooth device for communication.

As a possible implementation, the sequence in which the Bluetooth device automatically establishes the Bluetooth connections with the historical connection devices may be determined based on priorities of the historical connection devices; and specifically, the priorities of the historical connection devices may be determined based on at least one of: a frequency or time sequence of establishing the Bluetooth connection with the Bluetooth device, or a frequency or time sequence of performing data transmission with the Bluetooth device.

When the Bluetooth device enables the Bluetooth function for a first time, i.e., no historical connection device has established a Bluetooth connection with the Bluetooth device, the memory of the Bluetooth device does not store identifier information of any terminal device. In this case, the Bluetooth device may wait for a terminal device to send a Bluetooth connection request to the Bluetooth device, and may, after successfully establishing the Bluetooth connection with the Bluetooth device, determine a priority of the terminal device based on at least one of the above approaches.

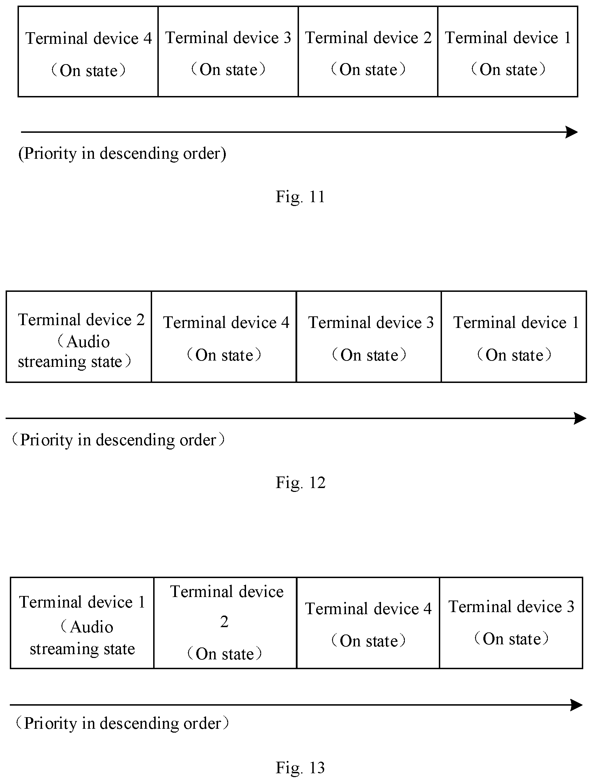

As shown in Fig. 11, a schematic priority diagram of historical connection devices provided in an embodiment of the present disclosure is shown. In the present embodiment, priorities of the terminal devices are determined based on a time sequence in which the terminal devices establish Bluetooth connections with a Bluetooth device, a terminal device that finally establishes a Bluetooth connection with the Bluetooth device has a highest priority, and a terminal device that first establishes a Bluetooth connection with the Bluetooth device has a lowest priority. Referring to Fig. 11, the Bluetooth device enables a Bluetooth function for a first time, a terminal device 1 first establishes a Bluetooth connection with the Bluetooth device, and a state of an AVDTP connection between the terminal device 1 and the Bluetooth device is an on state. Then, a terminal device 2, a terminal device 3, and a terminal device 4 successively establish a Bluetooth connection with the Bluetooth device, and states of AVDTP connections with the Bluetooth device are all on state. In this case, a priority of the terminal device 4 that finally establishes the Bluetooth connection with the Bluetooth device is highest, and priorities of the terminal device 3, the terminal device 2, and the terminal device 1 are in descending order.

Since the above four terminal devices have established Bluetooth connections with the Bluetooth device, all of them are historical connection devices for the Bluetooth device, and the memory of the Bluetooth device may store identifier information of the above four terminal devices. When re-enabling the Bluetooth function, the Bluetooth device may automatically attempt to establish Bluetooth connections with the four historical connection devices successively based on the above priority order.

As shown in Fig. 12, another schematic priority diagram of the historical connection devices provided in an embodiment of the present disclosure is shown. In the present embodiment, priorities of the terminal devices are determined based on a time sequence in which the terminal devices establish Bluetooth connections with a Bluetooth device, and a time sequence in which the terminal devices perform data transmission with the Bluetooth device. Specifically, referring to Fig. 12 , on the basis of the last embodiment, the terminal device 2 enables an audio service and performs audio data transmission with the Bluetooth device, and a state of an AVDTP connection between the terminal device 2 and the Bluetooth device is switched from an on state to an audio streaming state. In this case, the terminal device 2 may be set as a terminal device with a highest priority, and when re-enabling a Bluetooth function, the Bluetooth device first attempts to establish a Bluetooth connection with the terminal device 2.

As shown in Fig. 13, still another schematic priority diagram of the historical connection devices provided in an embodiment of the present disclosure is shown. On the basis of the last embodiment, the terminal device 2 suspends audio data transmission with the Bluetooth device; then the terminal device 1 enables an audio service, and performs audio data transmission with the Bluetooth device; a state of an AVDTP connection between the terminal device 2 and the Bluetooth device is switched from an audio streaming state to an on state, and a state of an AVDTP connection between the terminal device 1 and the Bluetooth device is switched from an on state to an audio streaming state. In this case, the terminal device 1 becomes a terminal device with a highest priority, and when re-enabling a Bluetooth function, the Bluetooth device first attempts to establish a Bluetooth connection with the terminal device 1.

On the basis of the last embodiment, when an additional terminal device successfully establishes a Bluetooth connection with the Bluetooth device, the additional terminal device may be set as a terminal device with a highest priority; or, a priority of the additional terminal device may be set as second only to a priority of the terminal device 1 that is performing audio data transmission with the Bluetooth device.

The priority arrangement approach provided in the embodiments of the present disclosure is to set a terminal device that has been most recently connected by a user or a terminal device that has been most recently used by a user as a device with a highest priority, thereby contributing to enabling the Bluetooth device to establish a Bluetooth connection with a target device within shortest time, shortening the user's waiting time, and further improving the user experience.

It should be noted that the priority arrangement approach provided in the embodiments of the present disclosure is also adapted to two or more than two (other number of) terminal devices.

In addition, considering that a Bluetooth device may have a maximum number of connections, in general, the maximum number of connections of a Bluetooth device is 7, i.e., a Bluetooth device may establish Bluetooth connections with at most 7 terminal devices. Therefore, a memory of the Bluetooth device may be set to be capable of storing identifier information of at most 7 terminal devices.

When the number of terminal devices that establish Bluetooth connections with the Bluetooth device has reached the maximum number of connections of the Bluetooth device, and an additional terminal device sends a Bluetooth connection request to the Bluetooth device, identifier information of a terminal device with a lowest priority may be first deleted from the memory of the Bluetooth device, then identifier information of the additional terminal device may be added to the memory of the Bluetooth device, and priorities of all terminal devices whose identifier information is currently stored are rearranged.

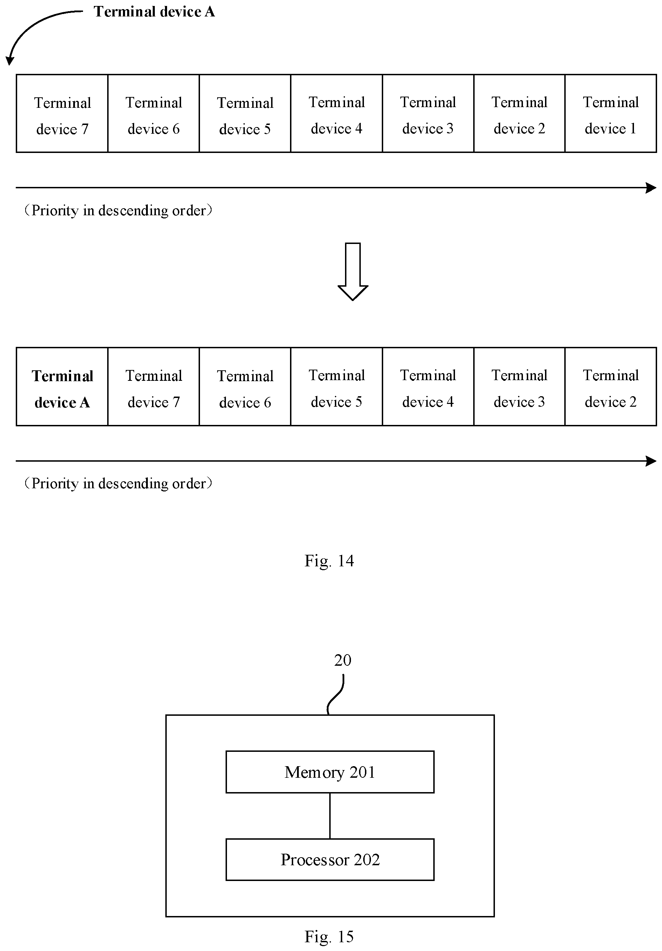

As an example, as shown in Fig. 14, a schematic priority diagram of historical connection devices after an additional terminal device is added provided in an embodiment of the present disclosure is shown. Referring to Fig. 14, the Bluetooth device has established Bluetooth connections with 7 terminal devices (terminal device 1 to terminal device 7), and corresponding priorities of the terminal device 1 to the terminal device 7 are in ascending order. After the Bluetooth device receives a Bluetooth connection request sent from a terminal device A, since the terminal device 1 has a lowest priority, the Bluetooth device deletes identifier information of the terminal device 1 stored in the memory, then adds identifier information of the terminal device A into the memory, and rearranges priorities of the terminal device A and the terminal device 2 to the terminal device 7. Finally, the priority of the terminal device A is the highest, and the priorities of the terminal device 7 to the terminal device 2 is in descending order. When re-enabling a Bluetooth function, the Bluetooth device may automatically attempt to establish Bluetooth connections with the seven historical connection devices successively based on the above priority order.

It should be noted that the priorities of the terminal devices may also be arranged based on a frequency of establishing a Bluetooth connection between the terminal devices and the Bluetooth device, or a frequency of performing data transmission between the terminal devices and the Bluetooth device, such that the Bluetooth device establishes Bluetooth connections with commonly used Bluetooth devices within short time, thereby reducing the user's waiting time, and further improving the user experience. Alternatively, a combination of the above priority arrangement approaches may also be used. For example, when the number of terminal devices that establish Bluetooth connections with the Bluetooth device does not exceed a maximum number of connections, a priority of each terminal device may be determined based on a time sequence of establishing a Bluetooth connection between the terminal device and the Bluetooth device and a time sequence of performing data transmission between the terminal device and the Bluetooth device; and when the number of terminal devices that establish Bluetooth connections with the Bluetooth device exceeds the maximum number of connections, a historical connection device with a lowest frequency of establishing a Bluetooth connection with the Bluetooth device or a lowest frequency of performing data transmission with the Bluetooth device may be defined as a terminal device with a lowest priority.

In a second aspect, as shown in Fig. 15, a schematic structural diagram of a Bluetooth chip provided in an embodiment of the present disclosure is shown. A Bluetooth chip 20 includes: a memory 201 and a processor 202; where the memory 201 is configured to store computer program instructions, and the processor 202 is configured to invoke the computer program instructions stored in the memory 201, such that the Bluetooth chip 20 may execute the method for switching a Bluetooth connection provided in the first aspect or any one of the possible implementations in the first aspect described above.

Specifically, the memory 201 may be a volatile memory (VM) such as a random access memory (RAM), or a non-volatile memory (NVM) such as a hard disk drive (HDD) or a solid state drive (SSD), or a circuit or any other apparatus capable of realizing storage functions. The memory 201 is, and is not limited to, any other medium that may store or carry desired program codes in the form of instructions or data structures and can be accessed by a computer.

The processor 202 may be, and is not limited to, a general purpose processor (such as a microprocessor), a digital signal processor, an application specific integrated circuit, a transistor logic device, a field programmable gate array, or other programmable logic devices, and may implement or execute the methods, steps, and logic block diagrams provided in the embodiments of the present disclosure. The methods and steps provided in the embodiments of the present disclosure may be directly embodied as being executed and completed by a hardware processor, or being executed and completed by a combination of hardware and software modules in the processor.

The methods provided in the embodiments of the present disclosure may be implemented completely or partially by software, hardware, firmware, or any combination thereof, and when implemented by software, may be implemented completely or partially in the form of a computer program product, where the computer program product includes one or more computer instructions. When the computer instructions are loaded and executed on a computer, the processes or functions described according to the embodiments of the present disclosure may be generated completely or partially; the computer may be a general purpose computer, a special purpose computer, a computer network, a network device, a user device, or other programmable apparatuses; and the computer instructions may be stored in a computer readable storage medium, or transmitted from one computer readable storage medium to another computer readable storage medium, for example, the computer instructions may be transmitted from a computer, server, website, or data center to another computer, server, website, or data center by wired transmission (such as light, coaxial cable, or digital subscriber line (DSL)) or wireless transmission (such as microwave, millimeter wave, or infrared). The computer readable storage medium may be any available medium accessible to the computer, or may be a data storage device, such as a server or a data center, integrated with one or more available mediums. The available medium may be, and is not limited to, a magnetic medium (such as a hard disk drive, a floppy disk, or a magnetic tape), a semiconductor medium (such as a solid state drive), or an optical medium (such as a digital video disk (DVD).

In a third aspect, an embodiment of the present disclosure provides a Bluetooth device, including a housing and the Bluetooth chip provided in the second aspect arranged within the housing.

As an example, the Bluetooth device may be a Bluetooth headset (such as a TWS earbud) or a Bluetooth speaker.

It should be understood that the specific implementations in the embodiments of the present disclosure are provided only to help those skilled in the art to better understand the embodiments of the present disclosure, rather than limiting the scope of the embodiments of the present disclosure. Those skilled in the art may make various improvements and modifications on the basis of the above embodiments, and these improvements or modifications all fall into the scope of protection of the present disclosure.

## Claims

1. A method for switching a Bluetooth connection, being applied to a Bluetooth device, the method comprising:
establishing, by the Bluetooth device, Bluetooth connections with a first terminal device and a second terminal device;
receiving, by the Bluetooth device, a content playing request from the first terminal device, and performing data transmission with the first terminal device;
receiving, by the Bluetooth device, a content playing request from the second terminal device, and sending a notification message for suspending data transmission to the first terminal device;
suspending, by the Bluetooth device, data transmission with the first terminal device, and maintaining the Bluetooth connection with the first terminal device; and
performing, by the Bluetooth device, data transmission with the second terminal device.

2. The method for switching a Bluetooth connection according to claim 1, wherein the first terminal device or the second terminal device is a historical connection device for the Bluetooth device; and the historical connection device is a terminal device that has established a Bluetooth connection with the Bluetooth device; and
identifier information of the first terminal device or identifier information of the second terminal device is stored in a memory of the Bluetooth device.

3. The method for switching a Bluetooth connection according to claim 2, wherein the establishing, by the Bluetooth device, the Bluetooth connections with the first terminal device and the second terminal device further comprises:
automatically establishing, by the Bluetooth device, the Bluetooth connection with the first terminal device or the second terminal device based on the identifier information of the first terminal device or the identifier information of the second terminal device.

4. The method for switching a Bluetooth connection according to claim 3, wherein the automatically establishing, by the Bluetooth device, the Bluetooth connection with the first terminal device or the second terminal device based on the identifier information of the first terminal device or the identifier information of the second terminal device further comprises:
sending, by the Bluetooth device, a request for establishing a Bluetooth physical link to the first terminal device or the second terminal device;
receiving, by the Bluetooth device, a response for establishing the Bluetooth physical link sent from the first terminal device or the second terminal device;
sending, by the Bluetooth device, a request for establishing a signal channel and a data channel to the first terminal device or the second terminal device;
receiving, by the Bluetooth device, a response for establishing the signal channel and the data channel sent from the first terminal device or the second terminal device;
sending, by the Bluetooth device, a request for establishing a remote control connection to the first terminal device or the second terminal device; and
receiving, by the Bluetooth device, a response for establishing the remote control connection sent from the first terminal device or the second terminal device.

5. The method for switching a Bluetooth connection according to claim 3, wherein the automatically establishing, by the Bluetooth device, the Bluetooth connection with the first terminal device or the second terminal device based on the identifier information of the first terminal device or the identifier information of the second terminal device further comprises:
implementing, by the Bluetooth device, an operation of establishing a first ACL link or a second ACL link with the first terminal device or the second terminal device;
implementing, by the Bluetooth device, an operation of establishing a first AVDTP connection or a second AVDTP connection with the first terminal device or the second terminal device; and
implementing, by the Bluetooth device, an operation of establishing a first AVRCP connection or a second AVRCP with the first terminal device or the second terminal device.

6. The method for switching a Bluetooth connection according to claim 5, wherein after the Bluetooth device implements the operation of establishing the first AVDTP connection or the second AVDTP connection with the first terminal device or the second terminal device, a state of the first AVDTP connection or the second AVDTP connection is switched from an idle state to an on state.

7. The method for switching a Bluetooth connection according to claim 6, wherein after the Bluetooth device receives the content playing request from the first terminal device or the second terminal device, the state of the first AVDTP connection or the second AVDTP connection is switched from the on state to an audio streaming state.

8. The method for switching a Bluetooth connection according to claim 7, wherein the suspending, by the Bluetooth device, data transmission with the first terminal device, and maintaining the Bluetooth connection with the first terminal device further comprises:
switching the state of the first AVDTP connection from the audio streaming state back to the on state.

9. The method for switching a Bluetooth connection according to any one of claims 2 to 8, wherein a sequence in which the Bluetooth device establishes the Bluetooth connections with the first terminal device and the second terminal device is determined based on priorities of the first terminal device and the second terminal device; and
the priorities of the first terminal device and the second terminal device are determined based on at least one of: a frequency or time sequence of establishing the Bluetooth connection with the Bluetooth device, or a frequency or time sequence of performing data transmission with the Bluetooth device.

10. The method for switching a Bluetooth connection according to claim 9, wherein a number of pieces of identifier information of historical connection devices stored in the memory of the Bluetooth device is less than or equal to a maximum number of connections of the Bluetooth device.

11. The method for switching a Bluetooth connection according to claim 10, wherein when a number of historical connection devices that have established Bluetooth connections with the Bluetooth device reaches the maximum number of connections of the Bluetooth device, and an additional terminal device requests to establish a Bluetooth connection with the Bluetooth device, identifier information of a historical connection device with a lowest priority is deleted, and identifier information of the additional terminal device is stored in the memory of the Bluetooth device.

12. The method according to claim 11, wherein after the identifier information of the additional terminal device is stored in the memory of the Bluetooth device, priorities of terminal devices whose identifier information is stored in the memory of the Bluetooth device are rearranged.

13. The method for switching a Bluetooth connection according to claim 1, wherein the method further comprises:
receiving, by the Bluetooth device, a content playing request from the first terminal device again, and sending a notification message for suspending data transmission to the second terminal device;
suspending, by the Bluetooth device, data transmission with the second terminal device, and maintaining the Bluetooth connection with the second terminal device; and
performing, by the Bluetooth device, data transmission with the first terminal device again.

14. A Bluetooth chip, comprising: a memory and a processor, the memory being coupled to the processor; wherein
the memory is configured to store computer program instructions; and
the processor is configured to invoke the computer program instructions stored in the memory, such that the Bluetooth chip executes the method for switching a Bluetooth connection according to any one of claims 1 to 13.

15. A Bluetooth device, comprising a housing and the Bluetooth chip according to claim 14 arranged within the housing.
